# EUROPEAN PATENT APPLICATION

(11) **EP 4 715 369 A1**
(43) Date of publication of application: **25.03.2026**
(21) Application number: 25189947.2
(22) Date of filing: 16.07.2025
(51) Int. Cl.: G01N 21/3581, H01M 10/42

(54) **METHOD AND SYSTEM FOR INSPECTING BATTERY CELL**

(30) Priority: 19.09.2024 KR 20240126772
(71) Applicant: SAMSUNG SDI CO., LTD., Yongin-si, Gyeonggi-do 17084 (KR)
(72) Inventor: KANG, Suhyeon, 17084 Yongin-si, Gyeonggi-do (KR); KIM, Jinmun, 17084 Yongin-si, Gyeonggi-do (KR); CHOI, Huiju, 17084 Yongin-si, Gyeonggi-do (KR)
(74) Representative: Bardehle Pagenberg Partnerschaft mbB Patentanwälte Rechtsanwälte

(57) **Abstract**

A method (1000) of inspecting a battery cell (400) includes: irradiating (S1010), by a light source device (310), an electromagnetic wave (522) toward the battery cell (400) including an electrode assembly and an electrolyte; generating (S1020), by a sensing device (320), reflected wave data by sensing a reflected wave from the battery cell (400); and generating (S1030) electrolyte impregnation data indicating a degree to which the electrode assembly is impregnated with the electrolyte based on the reflected wave data.

## Description

### BACKGROUND

### 1. Field

Aspects of embodiments of the present disclosure relate to a method and device for inspecting a battery cell using terahertz waves.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

An electrolyte may be injected into a secondary battery, and the electrode assembly included in the secondary battery may be impregnated with the electrolyte. In this case, if the electrode assembly is not impregnated, the output and performance of the secondary battery may be decreased and its service life may be shortened.

The above information disclosed in this Background section is for enhancement of understanding of the background of the present disclosure, and therefore, it may contain information that does not constitute related (or prior) art.

### SUMMARY

In order to improve the output and performance of the secondary battery and/or to increase its service life, it may be desirable to know the degree of electrolyte impregnation of the electrode assembly in the secondary battery. However, it may be difficult to determine the degree to which the electrode assembly is impregnated with the electrolyte without disassembling or destroying the secondary battery.

According to the present invention, a method and a device for inspecting a battery cell as claimed in claims 1 and 11 are provided. Preferred embodiments of the invention are described in the dependent claims.

These and other aspects and features of the present disclosure will be described in or will be apparent from the following description of embodiments of the present disclosure.

According to one or more embodiments of the present disclosure, a method of inspecting a battery cell includes: irradiating, by a light source device, an electromagnetic wave toward the battery cell including an electrode assembly and an electrolyte; generating, by a sensing device, reflected wave data by sensing a reflected wave from the battery cell; and generating electrolyte impregnation data indicating a degree to which the electrode assembly is impregnated with the electrolyte based on the reflected wave data.

In an embodiment, a frequency of the electromagnetic wave irradiated by the light source device may be in a range of 0.1 THz to 10 THz.

In an embodiment, the electromagnetic wave irradiated by the light source device may be pulsed or continuous.

In an embodiment, the method may further include generating an electrolyte impregnation image of the battery cell based on the electrolyte impregnation data.

In an embodiment, the irradiating of the electromagnetic wave may include: irradiating the electromagnetic wave to an area between a first start area and a first arrival area, the first start area and the first arrival area being located on one face of the battery cell. The first start area may correspond to one end on the one face of the battery cell, the first arrival area may correspond to another end on the one face of the battery cell, and the other end may be opposite to the one end with respect to a first direction.

In an embodiment, the one face of the battery cell may include a plurality of edges, and vertices where the plurality of edges meet. The first start area may correspond to a vertex from among the vertices.

In an embodiment, the irradiating of the electromagnetic wave to the area between the first start area and the first arrival area may include: irradiating the electromagnetic wave to a first sub-area between the first start area and the first arrival area; and irradiating the electromagnetic wave to a second sub-area spaced by a first distance from the first sub-area with respect to the first direction.

In an embodiment, the irradiating of the electromagnetic wave may include irradiating the electromagnetic wave to an area between a second start area and a second arrival area, the second start area and the second arrival area being located on the one face of the battery cell. The second start area may be spaced by a second distance from the first start area with respect to a second direction perpendicular to the first direction, and the second arrival area may be spaced by the second distance from the first arrival area with respect to the second direction.

In an embodiment, the generating of the electrolyte impregnation data may include generating the electrolyte impregnation data based on a ratio of an intensity of the electromagnetic wave and an intensity of the reflected wave.

In an embodiment, the light source device may include a femtosecond laser and a photoconductive antenna, and the irradiating of the electromagnetic wave may include: irradiating a laser beam onto the photoconductive antenna by the femtosecond laser; and outputting the electromagnetic wave based on the laser beam by the photoconductive antenna.

According to one or more embodiments of the present disclosure, a device for inspecting a battery cell includes: a light source device configured to irradiate an electromagnetic wave toward the battery cell including an electrode assembly and an electrolyte; a sensing device configured to generate reflected wave data by sensing a reflected wave from the battery cell; and a processor configured to generate electrolyte impregnation data indicating a degree to which the electrode assembly is impregnated with the electrolyte based on the reflected wave data.

In an embodiment, the light source device may be configured to irradiate the electromagnetic wave in a frequency in a range of 0.1 THz to 10 THz.

In an embodiment, the light source device may be configured to irradiate the electromagnetic wave as pulsed or continuous.

In an embodiment, the processor may be configured to generate an electrolyte impregnation image of the battery cell based on the electrolyte impregnation data.

In an embodiment, the light source device may be configured to irradiate the electromagnetic wave to an area between a first start area and a first arrival area, the first start area and the first arrival area being located on one face of the battery cell. The first start area may correspond to one end on the one face of the battery cell, the first arrival area may correspond to another end on the one face of the battery cell, and the other end may be opposite to the one end with respect to a first direction.

In an embodiment, the one face of the battery cell may include a plurality of edges, and vertices where the plurality of edges meet, and the first start area may correspond to a vertex from among the vertices.

In an embodiment, the light source device may be configured to: irradiate the electromagnetic wave to a first sub-area between the first start area and the first arrival area; and irradiate the electromagnetic wave to a second sub-area spaced by a first distance from the first sub-area with respect to the first direction.

In an embodiment, the light source device may be configured to irradiate with the electromagnetic wave an area between a second start area and a second arrival area, the second start area and the second arrival area being located on the one face of the battery cell. The second start area may be spaced by a second distance from the first start area with respect to a second direction perpendicular to the first direction, and the second arrival area may be spaced by the second distance from the first arrival area with respect to the second direction.

In an embodiment, the processor may be configured to generate the electrolyte impregnation data based on a ratio of an intensity of the electromagnetic wave and an intensity of the reflected wave.

In an embodiment, the light source device may include a femtosecond laser and a photoconductive antenna. The femtosecond laser may be configured to irradiate a laser beam onto the photoconductive antenna, and the photoconductive antenna may be configured to output the electromagnetic wave based on the laser beam.

According to some embodiments of the present disclosure, a degree to which an electrode assembly of a battery cell is impregnated with an electrolyte may be determined using a battery cell inspection device.

According to some embodiments of the present disclosure, instead of destruction/disassembly of the battery cell in order to determine the degree of electrolyte impregnation of the electrode assembly like in a comparative example, the battery cell inspection device may output or determine the degree of electrolyte impregnation of the electrode assembly of the battery cell in a non-destructive manner.

According to some embodiments of the present disclosure, by dividing one face of the battery cell into various sections, irradiating the entire or substantially entire face of the battery cell with an electromagnetic wave, and then sensing the electromagnetic wave, electrolyte impregnation data of the entire battery cell may be obtained, and sufficiently accurate electrolyte impregnation data (e.g., highly accurate electrolyte impregnation data) may be obtained.

According to some embodiments of the present disclosure, the user may more easily identify un-impregnated areas of the battery cell visually through an electrolyte impregnation image.

According to some embodiments of the present disclosure, a deviation (e.g., a variation) in the degree to which the battery cell is impregnated within one battery cell may be checked.

According to some embodiments of the present disclosure, un-impregnated areas that are located on the separator, as well as on the positive electrode plate and/or the negative electrode plate, may also be identified.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a schematic diagram of a battery cell inspection device according to some embodiments of the present disclosure;
FIG. 2 is a block diagram showing an internal configuration of a computing device according to some embodiments of the present disclosure;
FIG. 3 is a diagram showing an internal configuration of the battery cell inspection device according to some embodiments of the present disclosure;
FIG. 4 is a diagram showing an example of a battery cell according to some embodiments of the present disclosure;
FIG. 5 is a schematic diagram of a battery cell inspection device according to some embodiments of the present disclosure;
FIG. 6 is a diagram showing an example of one face of a battery cell according to some embodiments of the present disclosure;
FIG. 7 is an enlarged view of a part of the one face of the battery cell shown in FIG. 6;
FIG. 8 is an enlarged view of a part of the one face of the battery cell shown in FIG. 6;
FIG. 9 is a view showing an example of an electrolyte impregnation image according to some embodiments of the present disclosure; and
FIG. 10 is a flowchart showing an example of a battery cell inspection method according to some embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

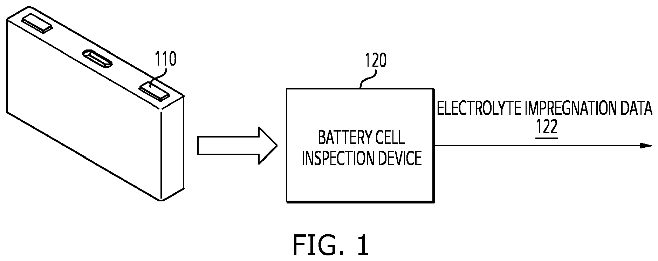

FIG. 1 is a schematic diagram of a battery cell inspection device 120 according to some embodiments of the present disclosure.

Referring to FIG. 1, the battery cell inspection device 120 may perform an inspection on a battery cell 110. The battery cell 110 may include an electrode assembly and an electrolyte. At least a part of the electrode assembly may be impregnated with the electrolyte. For example, parts of the electrode assembly may have a higher degree of impregnation with the electrolyte, and other parts of the electrode assembly may have a lower degree of impregnation with the electrolyte.

In more detail, the battery cell inspection device 120 may irradiate the battery cell 110 with an electromagnetic wave, and may sense a reflection (e.g., a reflected wave) from the battery cell 110. The battery cell inspection device 120 may generate reflected wave data by sensing the reflected wave, and may generate electrolyte impregnation data 122 indicating a degree to which the electrode assembly is impregnated with the electrolyte based on the reflected wave data. Further, the battery cell inspection device 120 may generate an electrolyte impregnation image of the battery cell 110 based on the electrolyte impregnation data 122.

In some embodiments, the electromagnetic wave that is irradiated by the battery cell inspection device 120 may include (e.g., may be) a terahertz wave. For example, the frequency of the electromagnetic wave may be included in a range of 0.1 THz to 10 THz. Terahertz waves may have a characteristic of being reflected by materials (e.g., metals, positive electrode plates, negative electrode plates, and the like) that are relatively easy to ionize, and a characteristic of being transmitted through materials (e.g., a separator, water, gas, and the like) that are relatively difficult to ionize. The battery cell inspection device 120 may utilize these characteristics of the terahertz waves.

In some embodiments, the battery cell inspection device 120 may output the electrolyte impregnation data 122. Further, the battery cell inspection device 120 may output the electrolyte impregnation image. The electrolyte impregnation data 122 and/or the electrolyte impregnation image may be output via an input/output interface and/or the like.

Further, in response to the electrolyte impregnation data 122 and/or the electrolyte impregnation image that satisfy a warning condition (e.g., a predetermined warning condition or the like), the battery cell inspection device 120 may output a warning alarm. For example, the warning condition may include a case in which a value included in the electrolyte impregnation data 122 is less than or equal to (e.g., less than) a threshold. As another example, there may be a plurality of areas having values less than or equal to a threshold among the values included in the electrolyte impregnation data 122. The warning condition may include a case in which the sum of the sizes of the corresponding plurality of areas is greater than or equal to (e.g., greater than) a threshold size. However, the present disclosure is not limited thereto, and the warning condition may be associated with a performance, a safety, and/or the like of the battery cell 110 based on the electrolyte impregnation data 122.

In some embodiments, each of the plurality of battery cells 110 may be transported to the battery cell inspection device 120. A battery cell inspection method may be performed on each of the plurality of battery cells 110 by the battery cell inspection device 120. In response to a battery cell 110 to be inspected satisfying the warning condition, a transportation of the plurality of battery cells 110 may be interrupted, and the battery cell 110 to be inspected may be separated and transported. Then, the transportation of the plurality of battery cells 110 may be resumed. Suitable measures to impregnate the electrode assembly included in the battery cell 110 with the electrolyte may be taken for the separated battery cell 110. For example, by having the separated battery cell 110 to be rotated, flipped upside down, and/or the like, the electrolyte inside the battery cell 110 may flow. As another example, gases inside the separated battery cell 110 may be discharged through a degassing process. However, the present disclosure is not limited thereto, and various suitable measures may be taken to impregnate the electrode assembly included in the battery cell 110 with the electrolyte.

If (e.g., when) the electrode assembly housed inside the battery cell 110 is not sufficiently impregnated with the electrolyte, a capacity of the battery cell 110 may be reduced and the service life thereof may be shortened. As described above, according to some embodiments of the present disclosure, the battery cell inspection device 120 may determine the degree to which the electrode assembly of the battery cell 110 is impregnated with the electrolyte. Further, destruction/disassembly of the battery cell 110 to determine the degree of electrolyte impregnation of the electrode assembly as in a comparative example may have been required, but the battery cell inspection device 120 according to some embodiments of the present disclosure may output the degree of electrolyte impregnation of the electrode assembly of the battery cell 110 in a non-destructive manner.

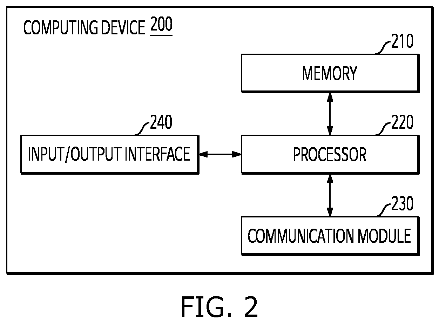

FIG. 2 is a block diagram showing an internal configuration of a computing device 200 according to some embodiments of the present disclosure.

Referring to FIG. 2, the computing device 200 may include a memory 210, a processor 220, a communication module 230, and an input/output interface 240. The computing device 200 may communicate information and/or data over a network using the communication module 230. A battery cell inspection device (e.g., the battery cell inspection device 120 of FIG. 1) may include the computing device 200. As another example, the battery cell inspection device may include the processor 220 of the computing device 200, and may communicate with and/or be connected to the components of the computing device 200 other than the processor 220. In more detail, a user may use the battery cell inspection device 120 to generate the electrolyte impregnation data 122 of FIG. 1, and the battery cell inspection device 120 may include one or more computing devices 200.

The memory 210 may include any suitable non-transitory computer-readable recording medium. According to some embodiments, the memory 210 may include a permanent mass storage device, such as read-only memory (ROM), a disk drive, a solid-state drive (SSDs), flash memory, and/or the like. As another example, the permanent mass storage device, such as ROM, SSD, flash memory, a disk drive, and/or the like, may be included in the computing device 200 as a separate persistent storage device distinct from the memory 210. Further, the memory 210 may store an operating system, and at least one program code (e.g., code for generating a 3D BB, which is installed and run in the computing device 200 and/or the like).

These software components may be loaded from a computer-readable recording medium separate from the memory 210. A separate computer-readable recording medium may include a recording medium that is directly connectable to the computing device 200, and may include, for example, computer-readable recording media, such as floppy drives, disks, tapes, DVD/CD-ROM drives, and/or memory cards. As another example, the software components may be loaded into the memory 210 via the communication module 230, rather than via the computer-readable recording media. For example, at least one program may be loaded onto the memory 210 based on a computer program (e.g., a program for electrolyte impregnation data 122 or the like) installed by files provided via the communication module 230 by developers or a file distribution system that distributes installation files of an application.

The processor 220 may process commands of the computer programs by performing basic arithmetic, logic, and input/output operations. The commands may be provided to a user terminal or another external system by the memory 210 or the communication module 230. For example, the processor 220 may generate the electrolyte impregnation data based on the reflected wave data. The generated electrolyte impregnation data may be provided to the user terminal or to another external system.

The communication module 230 may provide a configuration or a function for the user terminal and the computing device 200 to communicate with each other via a network, and may provide a configuration or a function for the computing device 200 to communicate with an external system (e.g., a separate cloud system and/or the like). As an example, control signals, commands, data, and the like provided under the control of the processor 220 of the computing device 200 may be transmitted to the user terminal and/or the external system by way of the communication module 230 and the network via the communication module of the user terminal and/or the external system.

The input/output interface 240 of the computing device 200 may be a means for interfacing with other devices for input or output that may be connected to the computing device 200 or that the computing device 200 may include. In FIG. 2, the input/output interface 240 is shown as an element separately from the processor 220, but the present disclosure is not limited thereto, and the input/output interface 240 may included in the processor 220. The computing device 200 may include more components than those illustrated in FIG. 2, as would be understood by those having ordinary skill in the art.

The processor 220 of the computing device 200 may manage, process, and/or store information and/or data received from a plurality of devices. In some embodiments, the processor 220 may receive location information of an electromagnetic wave irradiation area from a light source device. The processor 220 may receive position information of a sensing device from the sensing device. The processor 220 may receive reflected wave data from the sensing device. The processor 220 may generate the electrolyte impregnation data based on the reflected wave data. The processor 220 may generate the electrolyte impregnation image based on the electrolyte impregnation data.

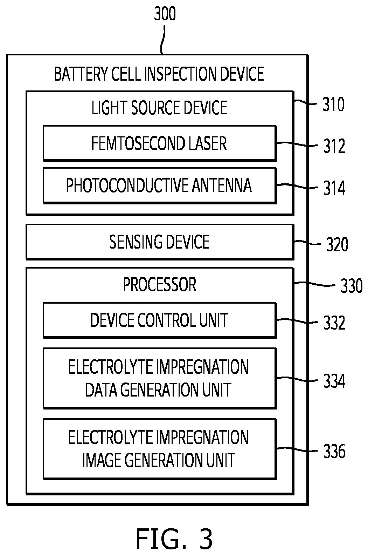

FIG. 3 is a diagram showing an internal configuration of the battery cell inspection device 300 according to some embodiments of the present disclosure.

Referring to FIG. 3, the battery cell inspection device 300 may include a light source device 310, a sensing device 320, and a processor 330. The battery cell inspection device 300 may perform a battery cell inspection method by using the light source device 310, the sensing device 320, and the processor 330.

In some embodiments, the electromagnetic wave irradiated by the light source device 310 may include (e.g., may be) a terahertz wave. For example, the frequency of the electromagnetic wave irradiated by the light source device 310 may be included in the range of 0.1 THz to 10 THz. The light source device 310 may use a femtosecond laser 312 and a photoconductive antenna 314 to output terahertz waves. In more detail, the femtosecond laser 312 may irradiate the photoconductive antenna 314 with a laser beam. The photoconductive antenna 314 may have pairs of electrons and holes formed therein by the laser beam, and may have a current formed by causing the electrons and holes to be accelerated inside the photoconductive antenna 314. The photoconductive antenna 314 may output terahertz waves by a change in the current. However, the present disclosure is not limited thereto, and the light source device 310 may include a variety of suitable components for outputting the terahertz waves.

In some embodiments, the electromagnetic wave irradiated by the light source device 310 may be pulsed or may be continuous. For example, the femtosecond laser 312 may periodically irradiate the photoconductive antenna 314 with a laser beam, thereby causing the photoconductive antenna 314 to output a pulsed electromagnetic wave. As another example, the light source device 310 may output a continuous electromagnetic wave by using a device capable of continuously outputting a terahertz wave.

In some embodiments, the sensing device 320 may sense a reflected wave reflected/scattered by a battery cell. The sensing device 320 may sense the reflected wave, and may generate reflected wave data. The reflected wave data may include information on the intensity of the reflected wave. For example, the sensing device 320 may be a terahertz detector, a terahertz camera, and/or the like. For example, if (e.g., when) the sensing device 320 includes (e.g., is) a terahertz camera, the sensing device 320 may generate an electrolyte impregnation image.

In some embodiments, the processor 330 may include a device control unit (e.g., a device controller) 332, an electrolyte impregnation data generation unit (e.g., an electrolyte impregnation data generator) 334, and an electrolyte impregnation image generation unit (e.g., an electrolyte impregnation image generator) 336. The device control unit 332 may receive information on the electromagnetic wave irradiation of the light source device 310 (e.g., the femtosecond laser 312, the photoconductive antenna 314, and/or the like included in the light source device 310). For example, the device control unit 332 may receive information on the intensity of the electromagnetic wave, the location of the electromagnetic wave irradiation area, the frequency of the electromagnetic wave, and/or the like. At least some of the information on the electromagnetic wave irradiation may be determined in advance. Further, at least some of the information on the electromagnetic wave irradiation may be received from the light source device 310. Similarly, the device control unit 332 may receive information on the position of the sensing device 320.

In some embodiments, the device control unit 332 may control the light source device 310 and the sensing device 320. For example, the device control unit 332 may adjust the intensity of the electromagnetic wave, change the location of the electromagnetic wave irradiation area, and/or change the frequency of the electromagnetic wave, by controlling the light source device 310. For example, the device control unit 332 may change the position of the sensing device 320.

Further, the device control unit 332 may control the light source device 310 and the sensing device 320 based on the information on the electromagnetic wave irradiation, the information on the position of the sensing device 320, and/or the like. For example, the device control unit 332 may change the sensing device 320 to a position suitable for sensing the reflected wave based on the information on the electromagnetic wave irradiation and the information on the position of the sensing device 320. As another example, the device control unit 332 may control the light source device 310, so that the light source device 310 irradiates an appropriate electromagnetic wave to a suitable location based on the information on the electromagnetic wave irradiation and the information on the position of the sensing device 320.

In some embodiments, the electrolyte impregnation data generation unit 334 may generate electrolyte impregnation data indicating a degree to which the electrode assembly of the battery cell is impregnated with the electrolyte based on the reflected wave data. In more detail, the electrolyte impregnation data generation unit 334 may generate the electrolyte impregnation data based on the ratio of the intensity of the electromagnetic wave and the intensity of the reflected wave. For example, the electrolyte impregnation data may include a reflectivity, which may be a value obtained by dividing the intensity of the reflected wave by the intensity of the electromagnetic wave.

For reflection of the electromagnetic waves by a same object, the greater the degree of electrolyte impregnation, the smaller the reflectivity may be. The relatively more the electrolyte is impregnated, the more the terahertz wave may be reflected by ions and/or the like contained in the electrolyte. On the other hand, the relatively less the electrolyte is impregnated, the more the terahertz wave may be transmitted by internal gases and/or the like. For example, in the reflection of the electromagnetic waves by the separator, areas impregnated with a relatively larger amount of electrolyte may have a lower reflectivity. Conversely, areas impregnated with a relatively smaller amount of electrolyte may have a higher reflectivity.

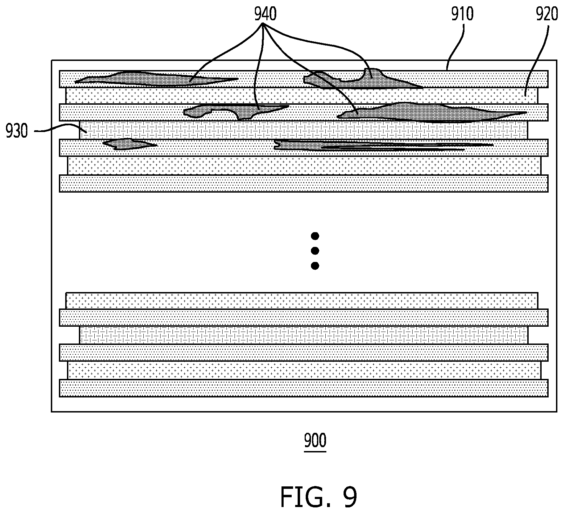

In some embodiments, the electrolyte impregnation data generation unit 334 may generate an electrolyte impregnation image of the battery cell based on the electrolyte impregnation data. For example, the electrolyte impregnation data generation unit 334 may obtain electrolyte impregnation data on at least parts of one face of the battery cell. The electrolyte impregnation data generation unit 334 may generate the electrolyte impregnation image on at least parts of the one face of the battery cell based on the electrolyte impregnation data on the at least parts of the one face of the battery cell. The electrolyte impregnation image may represent an appearance corresponding to at least parts of the battery cell. The electrolyte impregnation image may visually represent the reflectivity for each area of the battery cell. As a result, a user may identify areas in the battery cell that are relatively less impregnated with the electrolyte based on the electrolyte impregnation image. An example of an electrolyte impregnation image will be described in more detail below with reference to FIG. 9.

The internal components of the battery cell inspection device 300, the light source device 310, and/or the processor 330 shown in FIG. 3 are illustrative, and in some embodiments, other suitable components may be further included in addition to the internal components shown, some components may be omitted, and/or some processes may be performed by other components or external systems. Moreover, the internal components of the processor 330 are illustrated as being divided based on their functions in FIG. 3, but the present disclosure is not limited thereto, and such divided functions does not necessarily mean that the internal components are physically separated from each other.

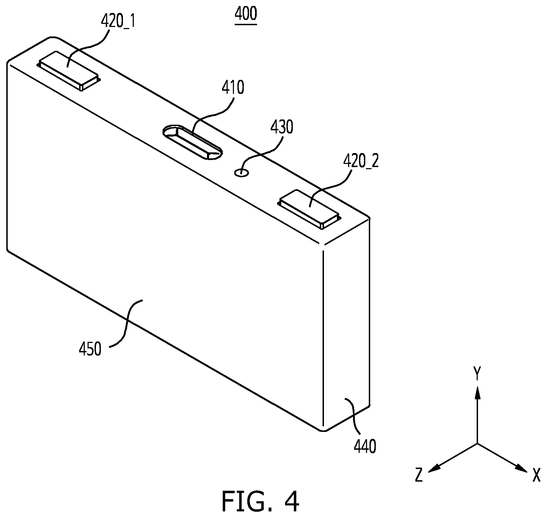

FIG. 4 is a diagram showing an example of a battery cell 400 according to some embodiments of the present disclosure.

Referring to FIG. 4. the battery cell 400 may include an electrode assembly, a vent part 410, an electrolyte injection port 430, a first terminal 420_1, a second terminal 420_2, a short-side wall part 440, and a long-side wall part 450.

The electrode assembly may be formed by winding or stacking a laminate of a first electrode plate, a separator, and a second electrode plate formed in a thin plate or film shape. If (e.g., when) the electrode assembly is a wound laminate, the winding axis may be parallel to or substantially parallel to the longitudinal direction of a case. Further, the electrode assembly may be a stack kind rather than a wound kind, and the shape of the electrode assembly is not particularly limited according to embodiments of the present disclosure. In some embodiments, the electrode assembly may be a Z-stack electrode assembly in which a first electrode plate and a second electrode plate are inserted on both sides (e.g., opposite sides) of a separator bent in a Z-stack. The first electrode plate of the electrode assembly may serve as an anode, and the second electrode plate may serve as a cathode. However, the present disclosure is not limited thereto, and first electrode plate of the electrode assembly may serve as the cathode, while the second electrode plate may serve as the anode.

A first electrode tab of the first electrode plate and a second electrode tab of the second electrode plate may be located at both ends (e.g., opposite ends) of the electrode assembly, respectively. In some examples, the electrode assembly may be housed in a case together with the electrolyte. Further, the electrode assembly may have a first current collecting part and a second current collecting part that are welded, connected, and positioned, respectively, at the first electrode tab of the first electrode plate and the second electrode tab of the second electrode plate, which are exposed on both sides. The first electrode tab may be electrically connected to the first terminal 420_1, and the second electrode tab may be electrically connected to the second terminal 420_2.

The vent part 410 may be located at the upper part of the battery cell 400. With the vent part 410, an explosion of the secondary battery may be prevented or substantially prevented, or a chain heating reaction of the secondary battery arranged in close proximity to the secondary battery may be prevented or substantially prevented. The electrolyte injection port 430 may be formed on the upper face of the case of the battery cell 400. An electrolyte may be injected into the case through the electrolyte injection port 430.

The first direction X may refer to the X-axis direction. The second direction Y may be perpendicular to or substantially perpendicular to the first direction X. The second direction Y may refer to the Y-axis direction. The third direction Z may be perpendicular to or substantially perpendicular to both of the first direction X and the second direction Y. The third direction Z may refer to the Z-axis direction.

The long-side wall part 450 may include a first long-side wall part and a second long-side wall part. The first long-side wall part and the second long-side wall part may be opposite to each other. The first long-side wall part and the second long-side wall part may be spaced apart from each other while facing each other in the third direction Z.

The short-side wall part 440 may include a first short-side wall part and a second short-side wall part. The first short-side wall part and the second short-side wall part may be opposite to each other. The first short-side wall part and the second short-side wall part may be spaced apart from each other while facing each other in the first direction X. The area of each of the first short-side wall part and the second short-side wall part may be smaller than the area of each of the first long-side wall part and the second long-side wall part.

The battery cell 400 is shown in the shape of a prismatic secondary battery in FIG. 4, but the present disclosure is not limited thereto. For example, the battery cell 400 may be a cylindrical secondary battery, a coin-type secondary battery, or a side terminal secondary battery, unlike that shown in FIG. 4.

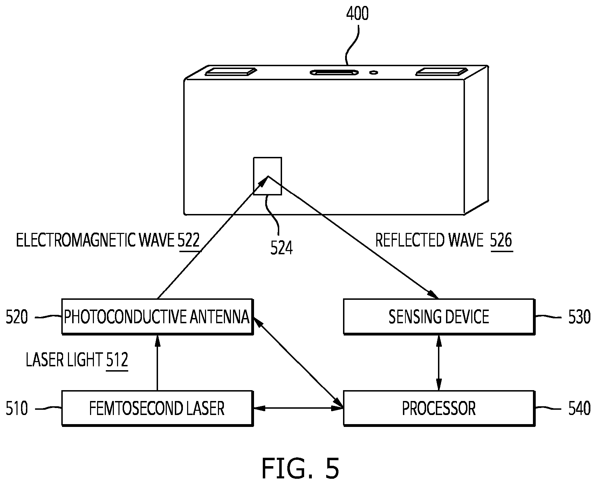

FIG. 5 is a schematic diagram of a battery cell inspection device according to some embodiments of the present disclosure.

Referring to FIG. 5, the battery cell 400 may be disposed around a light source device included in the battery cell inspection device. For example, the light source device may include a femtosecond laser 510 and a photoconductive antenna 520, and the battery cell 400 may be disposed around the photoconductive antenna 520.

In some embodiments, the femtosecond laser 510 may irradiate a laser beam (e.g., a laser light) 512 toward the photoconductive antenna 520. Inside the photoconductive antenna 520, pairs of electrons and holes may be formed by the laser beam 512, and the electrons and holes may be accelerated to form a current. The photoconductive antenna 520 may output an electromagnetic wave 522 by a change in the current. The electromagnetic wave 522 may include (e.g., may be) a terahertz wave, and the frequency of the electromagnetic wave 522 may be included in the range of 0.1 THz to 10 THz.

In some embodiments, the processor 540 may adjust the intensity, the output period, the pulse width, and/or the like of the laser beam 512 by controlling the femtosecond laser 510. Correspondingly, the intensity, the output period, the pulse width, and/or the like of the electromagnetic wave 522 outputted by the photoconductive antenna 520 may be adjusted.

In some embodiments, the photoconductive antenna 520 may irradiate the electromagnetic wave 522 toward one face of the battery cell 400. For example, the photoconductive antenna 520 may irradiate the electromagnetic wave 522 toward an irradiation area 524, which may be a partial area of the long-side wall part of the battery cell 400. At least a part of the electromagnetic wave 522 may be reflected/scattered by the battery cell 400, and may be radiated as a reflected wave 526.

In some embodiments, the sensing device 530 may generate reflected wave data by sensing the reflected wave 526 reflected/scattered by the battery cell 400. The reflected wave data may include information on the intensity of the reflected wave. The sensing device 530 may transmit the reflected wave data to the processor 540.

In some embodiments, the processor 540 may control the sensing device 530. For example, the processor 540 may adjust the position of the sensing device 530, so that the reflected wave 526 reaches a portion of the sensing device 530 that senses the electromagnetic wave. Further, the processor 540 may receive the reflected wave data from the sensing device 530.

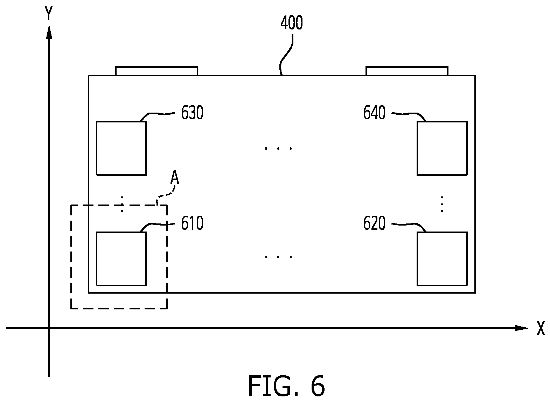

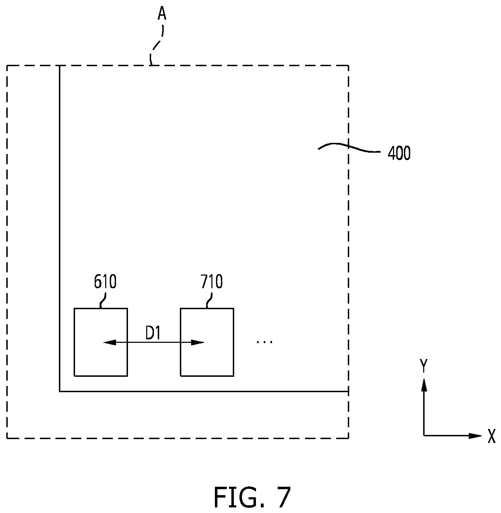

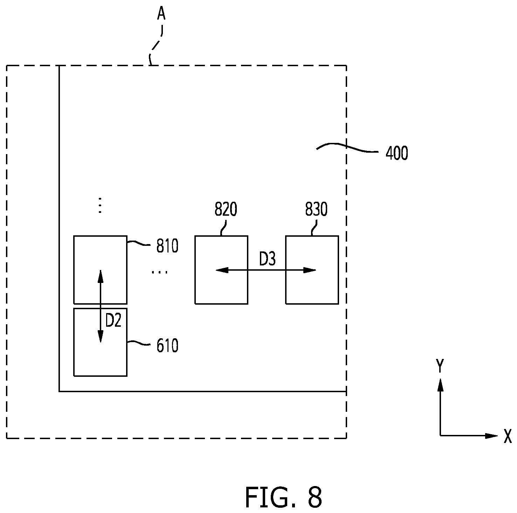

FIG. 6 is a diagram showing an example of one face of a battery cell 400 according to some embodiments of the present disclosure. FIG. 7 is an enlarged view of a part of the one face of the battery cell 400 shown in FIG. 6. FIG. 8 is an enlarged view of a part of the one face of the battery cell 400 shown in FIG. 6.

Referring to FIGS. 6 to 8, areas and a sequence in which the electromagnetic waves may be irradiated on one face of the battery cell 400 will be described in more detail hereinafter. Referring to FIG. 6, the electromagnetic wave may be irradiated to a part of the long-side wall part of the battery cell, but the present disclosure is not limited thereto, and the electromagnetic wave may be irradiated onto one face of a plurality of faces of the battery cell.

In some embodiments, the electromagnetic wave may be irradiated onto some areas of the one face of the battery cell. For example, the electromagnetic wave may be irradiated to a first start area 610, a first arrival area 620, a second start area 630, a second arrival area 640, and/or the like. Referring to FIG. 6, the areas where the electromagnetic wave is irradiated are shown as a square, but the present disclosure is not limited thereto, and the areas where the electromagnetic wave is irradiated may have various suitable extents, shapes, and/or the like.

In some embodiments, the electromagnetic wave may be irradiated to an area between the first start area 610 located on the one face of the battery cell 400 and the first arrival area 620 located on the one face of the battery cell 400. The first start area 610 may correspond to one side (e.g., one end) on the one face of the battery cell 400, and the first arrival area 620 may correspond to another side (e.g., another end or an opposite end) on the one face of the battery cell 400. The one side and the other side may be opposite to each other based on the first direction (e.g., the X-axis). In other words, each of the first start area 610 and the first arrival area 620 may correspond to one of opposite sides (e.g., one of opposite ends) on the one face of the battery cell 400.

In some embodiments, the electromagnetic wave may be periodically irradiated to the area between the first start area 610 and the first arrival area 620. For example, if (e.g., when) the electromagnetic wave is pulsed, the area between the first start area 610 and the first arrival area 620 may be irradiated at regular intervals. In other embodiments, the electromagnetic wave may be continuously irradiated to the area between the first start area 610 and the first arrival area 620. For example, if (e.g., when) the electromagnetic wave is continuous, the electromagnetic wave may be continuously irradiated to the area between the first start area 610 and the first arrival area 620. In response to the area irradiated with the electromagnetic wave that is moving, the position of the sensing device (e.g., the sensing device 530 in FIG. 5) may be changed.

In some embodiments, the one face of the battery cell 400 may have a plurality of edges, and may include vertices where the plurality of edges meet. Referring to FIG. 6, the one face of the battery cell 400 may have four edges as a rectangle, and may include vertices where two edges meet each other. However, the shape of the one face of the battery cell 400 is not limited thereto, and may have various suitable shapes such as a circle. The first start area 610 may correspond to a vertex included in the one face of the battery cell 400. The first start area 610 may be an area where the electromagnetic wave is first irradiated, and the area where the electromagnetic wave is first irradiated may correspond to a vertex.

In some embodiments, the second start area 630 may be spaced by a suitable distance (e.g., a predetermined distance) from the first start area 610 based on the second direction (e.g., the Y-axis) that is perpendicular to or substantially perpendicular to the first direction (e.g., the X-axis). The second arrival area 640 may be spaced by the suitable distance (e.g., the predetermined distance) from the first arrival area 620 based on the second direction. The electromagnetic wave may be irradiated to the area between the second start area 630 and the second arrival area 640. The electromagnetic wave may be irradiated to the area between the first start area 610 and the first arrival area 620, and then to the area between the second start area 630 and the second arrival area 640.

In some embodiments, a third start area may be further included and spaced by a suitable distance (e.g., a predetermined distance) from the second start area 630 based on the second direction (e.g., the Y-axis). A third arrival area may be spaced by the suitable distance (e.g., the predetermined distance) from the second arrival area 640 based on the second direction (e.g., the Y-axis). The third start area and/or the third arrival area may correspond to one side of the battery cell 400. For example, the first start area 610 and/or the first arrival area 620 may correspond to one side of the one face of the battery cell 400, and the third start area and/or the third arrival area may correspond to the other side of the battery cell 400. In this case, the one side and the other side may be opposite to each other.

In some embodiments, the first start area 610 may first be irradiated with the electromagnetic wave. The electromagnetic wave may be irradiated to the area between the first start area 610 and the first arrival area 620. Then, the electromagnetic wave may be irradiated to an area shifted in the second direction (e.g., the Y-axis). For example, the area between the second start area 630 and the second arrival area 640 may be irradiated. The second start area 630 may be located in an area between the first start area 610 and the third start area. Similarly, the second arrival area 640 may be located in an area between the first arrival area 620 and the third arrival area. Finally, after the electromagnetic wave is irradiated to the area between the third start area and the third arrival area, the irradiation of the electromagnetic wave may be terminated.

As described above, by dividing one face of the battery cell 400 into different sections, irradiating the entire face with the electromagnetic wave, and then sensing the electromagnetic wave that is reflected, electrolyte impregnation data of the entire battery cell 400 may be obtained, and suitably accurate electrolyte impregnation data (e.g., highly accurate electrolyte impregnation data) may be obtained.

Referring to FIG. 7, an enlarged view of the partial area A of the battery cell illustrated in FIG. 6 may be shown. The electromagnetic wave may be irradiated to a first sub-area. The first sub-area may be included in the area between the first start area 610 and the first arrival area 620. In FIG. 7, the first sub-area may correspond to the first start area 610.

Then, the electromagnetic wave may be irradiated to a second sub-area 710. The second sub-area 710 may be spaced by a first distance D1 from the first sub-area 610 based on the first direction (e.g., the X-axis). Referring to FIG. 7, the second sub-area 710 may be spaced by the first distance D1 from the first start area 610 corresponding to the first sub-area 610 based on the first direction (e.g., the X-axis). The first distance D1 may refer to, for example, a distance between the centers of the sub-areas (e.g., the first sub-area 610 and the second sub-area 710). As another example, the first distance D1 may refer to a distance between peripheries of the sub-areas. However, the present disclosure is not limited thereto, and any suitable numerical value that may define the positional relationship between the sub-areas may be defined as the distance (e.g., the first distance D1). Further, the distances may be determined in advance. The distances described in more detail below (e.g., the first distance D1 and/or the like) may be equal to each other or may be different from each other.

The first distance D1 is shown as being greater than the size of the sub-areas in FIG. 7, but the present disclosure is not limited thereto, and the first distance D1 may be less than the size of the sub-areas. Further, the first sub-area 610 and the second sub-area 710 are shown as being spaced (e.g., as separately) from each other, but the two sub-areas may overlap with each other.

In some embodiments, the electromagnetic wave may be irradiated to the first sub-area 610 and then to the second sub-area 710. Then, the electromagnetic wave may be irradiated to a third sub-area spaced by the first distance D1 from the second sub-area 710 based on the first direction (e.g., the X-axis). In this case, the electromagnetic wave may be irradiated to the sub-areas along the first direction (e.g., the X-axis). The electromagnetic wave may be irradiated to the first arrival area (e.g., the first arrival area 620 in FIG. 6), and then to a second start area.

Referring to FIG. 8, a second start area 810 may be spaced by a second distance D2 from the first start area 610 based on the second direction (e.g., the Y-axis). The electromagnetic wave may be irradiated to an area between the second start area 810 and a second arrival area. For example, a fourth sub-area 820 and a fifth sub-area 830 may be included between the second start area 810 and the second arrival area (e.g., 640 in FIG. 6).

Similar to the electromagnetic wave being irradiated to the area between the first start area 610 and the first arrival area, the electromagnetic wave may be irradiated to the area between the second start area 810 and the second arrival area. Referring to FIG. 8, the fourth sub-area 820 may be one area between the second start area 810 and the second arrival area. The electromagnetic wave may be irradiated to the fifth sub-area 830 spaced by a third distance D3 from the fourth sub-area 820 based on the first direction (e.g., the X-axis). Then, the electromagnetic wave may be irradiated to a sixth sub-area spaced by the third distance D3 from the fifth sub-area 830 based on the first direction (e.g., the X-axis). In this case, the electromagnetic wave may be irradiated to the sub-areas along the first direction (e.g., the X-axis). The electromagnetic wave may be irradiated to the second arrival area, and then to the third start area spaced by the second distance D2 from the second start area.

In some embodiments, the electromagnetic wave may be irradiated to a fourth start area spaced by the second distance D2 from the first arrival area based on the second direction (e.g., the Y-axis). In response thereto, the electromagnetic wave may be irradiated to a fourth arrival area spaced by the second distance D2 from the first start area 610 based on the second direction (e.g., the Y-axis). Then, the electromagnetic wave may be irradiated to an area between the fourth start area and the fourth arrival area. In this case, the electromagnetic wave may be irradiated in a multi-stage form on the one face of the battery cell 400. Further, the electromagnetic wave may be irradiated to the first arrival area, and then successively to the fourth start area.

FIG. 9 is a view showing an example of an electrolyte impregnation image 900 according to some embodiments of the present disclosure.

Referring to FIG. 9, a processor (e.g., the processor 220 of FIG. 2) may generate an electrolyte impregnation image 900 of the battery cell based on electrolyte impregnation data. The processor may generate the electrolyte impregnation image 900 by synthesizing the electrolyte impregnation data on one face of the battery cell. For example, the processor may generate the electrolyte impregnation image 900 that visually represents the reflectivity (e.g., the intensity of the reflected wave/intensity of the electromagnetic wave) for each area of the battery cell.

Referring to FIG. 9, the electrolyte impregnation image 900 may show an appearance of an electrode assembly included in the battery cell. In the electrolyte impregnation image 900, a positive electrode plate 930, a negative electrode plate 920, and a separator 910 may be shown. The positive electrode plate 930 may have a higher reflectivity than those of the negative electrode plate 920 and the separator 910. The negative electrode plate 920 may have a higher reflectivity than that of the separator 910.

Further, areas with a lower reflectivity may appear despite having the same or substantially the same configuration in the electrolyte impregnation image 900. In this case, the corresponding areas may be determined as un-impregnated areas 940 that are relatively less impregnated with the electrolyte. Referring to FIG. 9, the un-impregnated areas 940 may have a relatively lower reflectivity than that of the other areas of the separator 910. Further, FIG. 9 shows that some of the un-impregnated areas 940 in the electrolyte impregnation image 900 are located on the negative electrode plate 920.

As described above, the user may more easily identify the un-impregnated areas 940 of the battery cell visually through the electrolyte impregnation image 900. The deviation (e.g., the variation) in the degree to which the battery cell is impregnated within one battery cell may be checked. Further, the un-impregnated areas 940 located on the separator 910, as well as on the positive electrode plate 930 and/or the negative electrode plate 920, may also be identified.

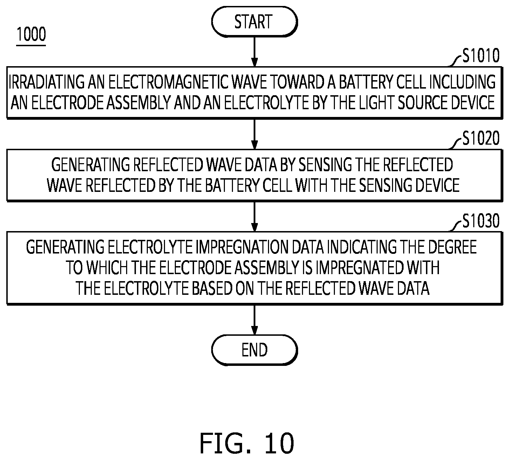

FIG. 10 is a flowchart showing an example of a battery cell inspection method 1000 according to some embodiments of the present disclosure.

Referring to FIG. 10, the battery cell inspection method 1000 may be performed by a battery cell inspection device (e.g., the battery cell inspection device 300 of FIG. 3). For example, the battery cell inspection device may include a light source device (e.g., the light source device 310 of FIG. 3), a sensing device (e.g., the sensing device 320 of FIG. 3), and a processor (e.g., the processor 330 of FIG. 3).

First, the battery cell inspection method 1000 may start, and an electromagnetic wave may be irradiated toward a battery cell including an electrode assembly and an electrolyte by the light source device (S1010). For example, the frequency of the electromagnetic wave irradiated by the light source device may be included in the range of 0.1 THz to 10 THz. For example, the electromagnetic wave irradiated by the light source device may be pulsed or continuous.

In some embodiments, the light source device may irradiate an electromagnetic wave to an area between a first start area located on one face of the battery cell and a first arrival area located on the one face of the battery cell. The first start area may correspond to one side (e.g., one end) on the one face of the battery cell, the first arrival area may correspond to another side (e.g., another end or an opposite end) on the one face of the battery cell, and the other side may be opposite to the one side based on a first direction.

In some embodiments, the light source device may irradiate the electromagnetic wave to a first sub-area between the first start area and the first arrival area. The light source device may irradiate the electromagnetic wave to a second sub-area spaced by a first distance from the first sub-area based on the first direction.

In some embodiments, the light source device may irradiate the electromagnetic wave to an area between a second start area located on the one face of the battery cell and a second arrival area located on the one face of the battery cell. The second start area may be spaced by a second distance from the first start area based on a second direction perpendicular to or substantially perpendicular to the first direction, and the second arrival area may be spaced by the second distance from the first arrival area based on the second direction.

Further, the one face of the battery cell may include a plurality of edges, and vertices where the plurality of edges meet, and the first start area may correspond to a vertex from among the vertices.

In some embodiments, the light source device may include a femtosecond laser and a photoconductive antenna. In this case, a laser beam (e.g., laser light) may be irradiated onto the photoconductive antenna by the femtosecond laser. Then, an electromagnetic wave may be output based on the laser beam by the photoconductive antenna.

In some embodiments, the battery cell inspection device may generate reflected wave data by sensing the reflected from the battery cell with the sensing device (S1020). In some embodiments, the sensing device and/or the processor may generate electrolyte impregnation data based on a ratio of the intensity of the electromagnetic wave and the intensity of the reflected wave.

In some embodiments, the battery cell inspection device may generate the electrolyte impregnation data indicating a degree to which the electrode assembly is impregnated with the electrolyte based on the reflected wave data (S1030), and the method 1000 may end.

In some embodiments, the battery cell inspection device may further generate an electrolyte impregnation image of the battery cell based on the electrolyte impregnation data.

The flowchart described above with reference to FIG. 10 is provided as an example of a method of the present disclosure, but the present disclosure is not limited thereto. For example, one or more processes in the flowchart of FIG. 10 may be added/modified/deleted as needed or desired, the order of one or more processes may be changed, and/or one or more processes may be performed concurrently (e.g., simultaneously or substantially simultaneously) with each other.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

### DESCRIPTION OF SOME REFERENCE NUMERALS

110: Battery cell
120: Battery cell inspection device
122: Electrolyte impregnation data

## Claims

1. A method (1000) of inspecting a battery cell (400), comprising:
irradiating (S1010), by a light source device (310), an electromagnetic wave (522) toward the battery cell (400) comprising an electrode assembly and an electrolyte;
generating (S1020), by a sensing device (320), reflected wave data by sensing a reflected wave from the battery cell (400); and
generating (S1030) electrolyte impregnation data indicating a degree to which the electrode assembly is impregnated with the electrolyte based on the reflected wave data.

2. The method as claimed in claim 1, wherein a frequency of the electromagnetic wave (522) irradiated by the light source device (310) is in a range of 0.1 THz to 10 THz.

3. The method as claimed in claim 1 or 2, wherein the electromagnetic wave (522) irradiated by the light source device (310) is pulsed or continuous.

4. The method as claimed in any of claims 1-3, further comprising:
generating an electrolyte impregnation image of the battery cell (400) based on the electrolyte impregnation data.

5. The method as claimed in any of claims 1-4, wherein the irradiating of the electromagnetic wave (522) comprises:
irradiating the electromagnetic wave (522) to an area between a first start area (610) and a first arrival area (620), the first start area (610) and the first arrival area (620) being located on one face of the battery cell (400),
particularly wherein the first start area (610) corresponds to one end on the one face of the battery cell (400),
wherein the first arrival area (620) corresponds to another end on the one face of the battery cell (400), and
wherein the other end is opposite to the one end based on a first direction.

6. The method as claimed in claim 5, wherein the one face of the battery cell (400) comprises a plurality of edges, and vertices where the plurality of edges meet, and
wherein the first start area (610) corresponds to a vertex from among the vertices.

7. The method as claimed in claim 5 or 6, wherein the irradiating of the electromagnetic wave (522) to the area between the first start area (610) and the first arrival area (620) comprises:
irradiating the electromagnetic wave (522) to a first sub-area between the first start area (610) and the first arrival area (620); and
irradiating the electromagnetic wave (522) to a second sub-area (710) spaced by a first distance from the first sub-area based on the first direction.

8. The method as claimed in claim 5, wherein the irradiating of the electromagnetic wave (522) comprises:
irradiating the electromagnetic wave (522) to an area between a second start area (630) and a second arrival area (640), the second start area (630) and the second arrival area (640) being located on the one face of the battery cell (400),
particularly wherein the second start area (630) is spaced by a second distance from the first start area (610) based on a second direction perpendicular to the first direction, and
wherein the second arrival area (640) is spaced by the second distance from the first arrival area (620) based on the second direction.

9. The method as claimed in any of claims 1-8, wherein the generating of the electrolyte impregnation data comprises:
generating the electrolyte impregnation data based on a ratio of an intensity of the electromagnetic wave (522) and an intensity of the reflected wave (526).

10. The method as claimed in any of claims 1-9, wherein the light source device (310) comprises a femtosecond laser (510) and a photoconductive antenna (520), and
particularly wherein the irradiating of the electromagnetic wave (522) comprises:
irradiating a laser beam (512) onto the photoconductive antenna by the femtosecond laser (510); and
outputting the electromagnetic wave (522) based on the laser beam by the photoconductive antenna (520).

11. A device (120) for inspecting a battery cell (400), comprising:
a light source device (310) configured to irradiate an electromagnetic wave (522) toward the battery cell (400) comprising an electrode assembly and an electrolyte;
a sensing device (320) configured to generate reflected wave data by sensing a reflected wave from the battery cell (400); and
a processor (330) configured to generate electrolyte impregnation data (122) indicating a degree to which the electrode assembly is impregnated with the electrolyte based on the reflected wave data.

12. The device as claimed in claim 11, wherein the light source device (310) is configured to irradiate the electromagnetic wave to an area between a first start area (610) and a first arrival area (620), the first start area (610) and the first arrival area (620) being located on one face of the battery cell (400),
particularly wherein the first start area (610) corresponds to one end on the one face of the battery cell (400),
wherein the first arrival area (620) corresponds to another end on the one face of the battery cell (400), and
wherein the other end is opposite to the one end based on a first direction.

13. The device as claimed in claim 12, wherein the one face of the battery cell (400) comprises a plurality of edges, and vertices where the plurality of edges meet, and
wherein the first start area (610) corresponds to a vertex from among the vertices.

14. The device as claimed in claim 12 or 13, wherein the light source device (310) is configured to:
irradiate the electromagnetic wave (522) to a first sub-area between the first start area (610) and the first arrival area (620); and
irradiate the electromagnetic wave (522) to a second sub-area (710) spaced by a first distance from the first sub-area based on the first direction.

15. The device as claimed in any of claims 12-14, wherein the light source device (310) is configured to irradiate with the electromagnetic wave (522) an area between a second start area (630) and a second arrival area (640), the second start area (630) and the second arrival area (640) being located on the one face of the battery cell (400),
particularly wherein the second start area (630) is spaced by a second distance from the first start area (610) based on a second direction perpendicular to the first direction, and
wherein the second arrival area (640) is spaced by the second distance from the first arrival area (620) based on the second direction.
